# EUROPÄISCHE PATENTSCHRIFT

(11) **EP 3 406 132 B1**
(45) Veröffentlichungstag und Bekanntmachung des Hinweises auf die Patenterteilung: **07.10.2020**
(21) Anmeldenummer: 18170400.8
(22) Anmeldetag: 02.05.2018
(51) Int. Cl.: A01F 15/07

(54) **ABWEISEREINRICHTUNG, PRESSE UND VERFAHREN**
STRIPPER DEVICE, PRESS AND METHOD
DISPOSITIF DÉFLECTEUR, PRESSE ET PROCÉDÉ

(30) Priorität: 23.05.2017 DE 102017208761
(43) Veröffentlichungstag der Anmeldung: 28.11.2018
(73) Patentinhaber: Deere & Company, Moline, IL 61265 (US)
(72) Erfinder: Gresset, Pascal, 68163 Mannheim (DE); Perrotin, Frederic, 68163 Mannheim (DE); Duret, Vincent, 68163 Mannheim (DE)
(74) Vertreter: Reichert, Christian

(56) Entgegenhaltungen:
- EP-A1- 0 095 688
- EP-A2- 1 648 217
- DE-U1- 8 325 223
- DE-U1-202005 018 518
- GB-A- 2 084 094
- US-B1- 9 434 419

## Beschreibung

Die vorliegende Erfindung betrifft eine landwirtschaftliche Ballenpresse mit einer Abweisereinrichtung zur Verminderung von Materialansammlungen in der Presse.

Bekannte Abweisereinrichtungen werden an Pressen eingesetzt, um einer Ansammlung von Material innerhalb der Presse entgegenzuwirken und damit einem Verstopfen und/oder Blockieren der Presse bzw. einzelner oder mehrerer Arbeitsmittel der Presse vorzubeugen. Derartige Pressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen. Die DE 83 25 223 U offenbart eine Ballenpresse mit einer Vorrichtung zur sicheren Zufuhr eine Hüllmittels in den Ballenpressraum.

Es sind Abweisereinrichtungen bekannt, die Material von bestimmten Bereichen und/oder Arbeitsmitteln wie beispielsweise Pressmitteln in der Art von Gurten, Rollen bzw. Walzen weg lenken, um Ansammlungen von Material entgegenzuwirken. Derartige Abweisereinrichtung sind üblicherweise in der Art steifer Abdeckungen ausgebildet, welche insbesondere bei schwierigen Erntebedingungen, wie beispielsweise trockenem Erntegut, nicht optimal wirken.

Die der Erfindung zugrunde liegende Aufgabe wird darin gesehen, eine Presse der eingangs genannten Art anzugeben, durch welche die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Es ist eine Abweisereinrichtung zur Verminderung von Materialansammlungen in einer Presse vorgesehen, die wenigstens einen zumindest abschnittsweise beweglich, flexibel ausgebildeten Abweiser aufweist. Dieser kann beispielsweise durch betriebsbedingte Vibrationen der Presse in Bewegung versetzt werden, wie sie beispielsweise durch eine Bewegung insbesondere mechanischer Arbeitsmittel bzw. Bauteile der Presse, wie etwa einer Aufnahmeeinrichtung, die Material bzw. Erntegut in einen Ballenpressraum einbringt, oder auch eines oder mehrerer Pressmittel, die oder das sich beweg(t)en, um in dem Ballenpressraum einen Ballen zu erzeugen, induziert werden, oder aber Auftreten, wenn die Presse einen insbesondere unebenen Untergrund überfährt. Der Abweiser kann beispielsweise derart ausgebildet sein, dass er schwingt, pendelt oder auch flattert, wodurch einem Ansammeln und/oder Ablagern bzw. Anhaften von Material in der näheren Umgebung des Abweisers vorgebeugt bzw. entgegengewirkt werden kann. Insbesondere kann der Abweiser beispielsweise in sich biegsam ausgebildet sein.

Der Abweiser ist einendends durch ein oder mehrere Haltemittel erfindungsgemäß direkt mit einem Rahmen der Presse verbunden. Andernends ist der Abweiser im Wesentlichen frei beweglich vorgesehen. Der Abweiser kann sich von dem/den Haltemittel(n) bzw. dem Rahmen weg erstrecken. Der Abweiser kann sich so beispielsweise, vorzugsweise wenigstens in einem Ruhezustand, zumindest im Wesentlichen vertikal nach unten erstrecken, es ist aber auch denkbar, dass er einen Winkel mit der Vertikalen einschließt.

Besonders einfach und kostengünstig ist es, wenn der Abweiser einteilig ausgebildet ist. Eine einteilige Ausbildung kann darüber hinaus die Haltbarkeit des Abweisers verbessern. Auch kann der Abweiser lappenartig ausgebildet sein, so dass er im Wesentlichen frei in den Bereich der Presse hineinragen bzw. hängen kann, in dem einer Ansammlung von Material entgegengewirkt werden soll. Es ist aber auch denkbar, dass der Abweiser mehrteilig ausgebildet ist bzw. die Abweisereinrichtung mehrere Abweiser aufweist, beispielsweise um hierdurch ein von einer einteiligen Ausbildung abweichendes Bewegungsmuster zu erzielen.

Es ist denkbar, dass der oder die Abweiser durch eine bzw. mehrere bewegliche Platte(n) gebildet wird/werden bzw. (eine) solche aufweist. Diese Platte(n) kann/können steif bzw. aus Metall, Hartplastik oder einem anderen steifen Werkstoff ausgebildet sein. Besonders vorteilhaft ist es aber, wenn der Abweiser zumindest bereichsweise aus einem elastischen und/oder gummiartigen Material besteht. Der Abweiser kann so auch in besonders einfacher Weise durch das/die Haltemittel gehalten werden, ohne dass hierzu eine gelenkige Verbindung notwendig ist. Eine verbesserte Haltbarkeit kann sich ergeben, wenn das verwendete Material eine textile Trägerschicht aufweist.

Bildet der Abweiser zumindest in seinem Endbereich eine Schlaufe, so kann dies insbesondere bei der Verwendung eines textilen Trägermaterials einem Auffasern entgegenwirken. Durch eine derartige Schlaufe kann auch einem Ansammeln bzw. An-/Ablagern von Material weiter entgegengewirkt werden, insbesondere wenn dieser Bereich eine nicht nur flatternde sondern auch schlagende Wirkung erzielt. Es ist auch denkbar, an einem dem/n Haltemitteln zugewandten Bereich eine Schlaufe vorzusehen, welche optional auch als Befestigungsmöglichkeit oder zur Unterstützung einer Befestigung des Abweisers an dem Rahmen genutzt werden kann.

Die Abweisereinrichtung kann an die jeweiligen Anforderungen angepasst angeordnet sein. Besonders günstig ist es aber, wenn die Abweisereinrichtung zumindest im Wesentlichen horizontal ausgerichtet ist, so dass eine möglichst freie Bewegung des bzw. der Abweiser möglich ist.

Wird eine Presse mit einer oder mehreren der zuvor beschriebenen Abweisereinrichtungen ausgestattet, so kann dies die Funktion der Presse unterstützen, indem Ansammlungen von Material in der Presse bzw. in einem oder mehreren Bereichen der Presse vermindert und/oder verhindert werden können. Auf diese Weise kann Anhaftungen bzw. Ablagerungen von Material und/oder Verstopfungen der Presse und damit ungewollten Stillstandszeiten der Presse entgegengewirkt werden. Eine solche Presse weist Gehäuse und wenigstens ein in dem Gehäuse angeordnetes Pressmittel auf. Bei der Presse handelt es sich eine landwirtschaftliche Ballenpresse zur Bildung rundzylindrischer Ballen. abei

Erfindungsgemäß ist vorgesehen, eine solche Abweisereinrichtung zwischen dem Pressmittel und dem Gehäuse- oder Rahmenteil einer Hüllmittelzufuhreinrichtung anzuordnen.

Beim Betrieb der Ballenpresse wird die Abweisereinrichtung während der Bildung eines Ballen durch im Betrieb der Presse auftretende Vibrationen derart beeinflusst, dass der Abweiser in Bewegung, vorzugsweise in Schwingung, Pendeln bzw. Flattern, versetzt wird, wodurch der Abweiser einer Ansammlung von Material entgegenwirken kann.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Presse in Seitenansicht mit einer Abweisereinrichtung und
- Fig. 2: eine vergrößerte Darstellung der Abweisereinrichtung.

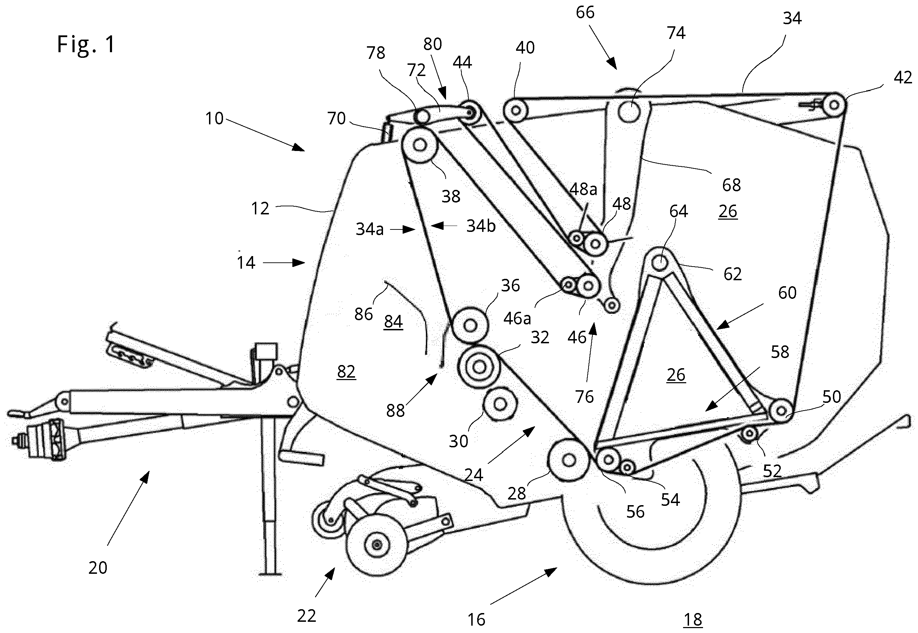

In der Fig. 1 der Zeichnung ist eine Ausführungsform einer Presse 10 dargestellt, die einen ein Gehäuse 12 tragenden Rahmen 14 aufweist, der sich über ein Fahrwerk 16 auf dem Untergrund 18 abstützt. Die gezeigte Presse 10 ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens aus Erntegut, aber auch aus Müll, Papier, Stoff bzw. Gewebe, Baumwolle, Tabak etc. eingesetzt werden. Eine solche Presse 10 kann von einem nicht gezeigten Arbeitsfahrzeug, vorzugsweise in der Art eines Ackerschleppers, gezogen werden oder auch selbstfahrend ausgebildet sein.

Gemäß dem vorliegenden Ausführungsbeispiel ist an der Vorderseite des Rahmens 14 eine Deichsel 20 vorgesehen, um die Presse 10 an einem nicht gezeigten Ackerschlepper anhängen und über ein Feld ziehen zu können. Eine Aufnahmevorrichtung 22 in Form einer Pick-Up dient zur Aufnahme von auf dem Untergrund 18 liegenden Erntegut, z.B. von in einem Schwad abgelegten Heu oder Stroh. Das von der Aufnahmevorrichtung 22 aufgenommene Erntegut wird einem Einlass 24 einem Ballenpressraums 26 zugeführt und dort spiralförmig zu einem rundzylindrischen Ballen aufgerollt, gebunden und anschließend auf dem Untergrund 18 abgelegt.

Am Einlass 24 des Ballenpressraums 26 sind eine untere, stationäre Rolle 28 und zwei obere Rollen 30, 32 positioniert. Der Ballenpressraum 26 wird weiterhin durch ein endloses Pressmittel 34 gebildet, das gemäß der vorliegenden Ausführungsform in der Art zweier nebeneinander anliegender Pressriemen ausgeführt ist und um eine Anzahl von ortsfesten Walzen 36, 38, 40, 42 und bewegbaren Walzen 44 , 42, 46, 48, 50, 52, 54, 56 geführt wird. Das Pressmittel 34 weist eine dem Rahmen 14 zugewandte Außenseite 34a und eine Innenseite 34b auf.

Während der Ballenpressraum 26 umfangsseitig im Wesentlichen von dem Pressmittel 34 und den Rollen 28, 30 und 32 umgeben wird, wird er seitlich von nicht gezeigten Seitenwänden begrenzt.

Vier Walzen 50, 52, 54, 56 der bewegbaren Walzen 44 - 56 sind in einem unteren Bereich 58 eines deltaförmigen Trägers 60 frei drehbar gelagert, der um seine obere Spitze 62 um eine horizontal und quer zur Vorwärtsrichtung verlaufende Achse 64 schwenkbar angelenkt ist und mit einem Aktor (nicht gezeigt) aus der in Fig. 1 dargestellten Ballenbildungsposition in eine nach hinten und oben verschwenkte Ballenauswurfposition verbringbar ist.

Ein Spannmechanismus 66 zur Straffung des Pressmittels 34 weist einen Spannhebel 68, der mit einem nicht gezeigten ersten Spannelement zusammenwirkt, und einen mit einem zweiten Spannelement 70 zusammenwirkenden Spannarm 72 auf. Sowohl das nicht gezeigte Spannelement als auch das Spannelement 72 kann in üblicher Weise als eine mechanische Feder oder als ein Hydraulikmotor ausgebildet sein und/oder einen solchen aufweisen.

Der Spannhebel 68 ist im Bereich der nicht gezeigten Seitenwände um eine horizontal und quer zur Vorwärtsrichtung verlaufende Achse 74 gelagert und trägt in einem der Achse 74 abgewandten Endbereich 76 zwei der bewegbaren Rollen 46, 48 sowie diesen Rollen 46, 48 zugeordnete Reinigungsrollen 46a, 48a. Der Spannarm 72 ist entsprechend um eine Achse 78 gelagert und trägt in einem Endbereich 80 eine der bewegbaren Rollen 44. Darüber hinaus ist der Spannarm 68 mit dem Spannelement 70 einenends wirksam verbunden, das andernends mit der Presse bzw. deren Rahmen 14 in nicht gezeigter Weise verbunden ist.

Das Pressmittel 34 wird mittels des Spannarms 70 stets so fest an die drehend angetriebene, ortsfeste Walze 38 angelegt, dass seine Mitnahme gewährleistet ist. Auch die Walze 36 wird drehend angetrieben. Das Pressmittel 34 nimmt einen Anfangszustand ein, in dem es gerade gestreckt den Einlass 24 überbrückt, und einen Endzustand, in dem es sich wie eine große Schlaufe um einen Ballen schlingt. Der Ballenpressraum 26 ist somit in seiner Größe veränderlich, d. h. sein Durchmesser nimmt mit der Größe des Ballens 18 zu. Der Ballen befindet sich während seiner Bildung in dem Ballenpressraum 26 und wird von dem Pressmittel 34 größtenteils umschlungen, fällt aber aus dem Ballenpressraum 26 nach hinten auf den Untergrund 18, sobald der Träger 60 mit den beweglichen Walzen 50 - 56 mit Blick auf die Zeichnung entgegen dem Uhrzeigerdrehsinn nach oben schwenkt. Alternativ kann der Ballen auch auf einem der Presse 10 nachgeordneten Gerät abgelegt werden.

Die dargestellte Ausführungsform der Ballenpresse ist in der EP 1 308 078 A1 detailliert offenbart. Andere, mögliche Ausführungsformen sind in der DE 198 51 470 A1, DE 102 41 215 A1 und der EP 1 264 531 A1 beschrieben. Die Offenbarungen dieser Dokumente werden durch Verweis mit in die vorliegenden Unterlagen aufgenommen. Es ist aber auch denkbar, dass die Presse 10 in der Art einer sogenannten Festkammerpresse, deren Pressmittel vorzugsweise durch im Wesentlichen stationärer Rollen gebildet werden, ausgebildet sein kann.

In einem der Deichsel 20 zugewandten Bereich 82 der Ballenpresse 10 ist darüber hinaus eine Hüllmittelzufuhreinrichtungen 84 vorgesehen, die in bekannter Art und Weise Hüllmittel (nicht gezeigt) an einen in dem Ballenpressraum 26 gebildeten Ballen heranführt. Gemäß dem vorliegenden Ausführungsbeispiel erfolgt die Zufuhr zwischen den oberen Rollen 30 und 32. Bei 86 ist ein Gehäuse- oder Rahmenteil der Hüllmittelzufuhreinrichtung 84 andeutungsweise dargestellt. Angrenzend an den Gehäuse- oder Rahmenteil 86 wird eine Abweisereinrichtung 88 gezeigt, die vorgesehen ist, um einer Ansammlung von Material bzw. Erntegut insbesondere in einem Bereich 90 zwischen dem Gehäuse- oder Rahmenteil 86 und dem Pressemittel 34 entgegenzuwirken.

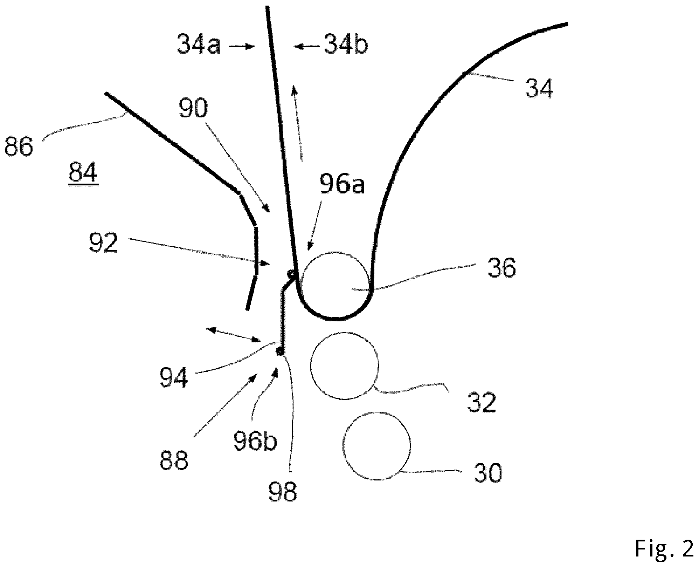

Es wird nun auch auf die Figur 2 der Zeichnung Bezug genommen, in der die Abweisereinrichtung 88 in einer vergrößertenr Darstellung gezeigt wird. Die Abweisereinrichtung 88 erstreckt sich in dem Bereich 90 zumindest im Wesentlichen über die Breite der Presse 10, wobei der Abweiser 94 über nur andeutungsweise dargestellte Haltemittel 92 mit dem Rahmen 14 der Presse 10 verbunden ist und sich von diesem weg erstreckt. Die Abweisereinrichtung 88 ist zwischen dem Pressmittel 34 und einem Gehäuse- oder Rahmenteil 86 einer Hüllmittelzufuhreinrichtung 84 angeordnet. Die Abweisereinrichtung ist derart angeordnet, dass aus dem Ballenpressraum 26 heraustretendes, nicht gepresstes Material zumindest teilweise von der Abweisereinrichtung 88 abgefangen wird. Damit wird das aus dem Ballenpressraum heraustretende Material davon abgehalten in einen vorderen Bereich der Ballenpresse, insbesondere in einen Bereich der Hüllmittelzufuhreinrichtung 84 zu gelangen, um sich dort festzusetzen. Es ist vielmehr vorgesehen, dass das von der Abweisereinrichtung 88 abgefangene Material ohne Materialanhäufungen abprallt und in Richtung Aufnahmevorrichtung 22 herunterfällt.

Der Abweiser 94 ist zumindest bereichsweise in der Art eines beweglichen bzw. flexiblen Lappens ausgebildet. Gemäß dem gezeigten Ausführungsbeispiel ist der Abweiser 94 einteilig vorgesehen und wird im Wesentlichen durch ein auf ein textiles Trägermaterial aufgebrachtes, gummiartiges Material gebildet, wobei der Begriff Gummi nicht auf Naturkautschuk beschränkt ist, sondern jedes andere, geeignete, insbesondere Kunststoffmaterial umfassen soll. Sowohl in seinem den Haltemitteln 92 zu als auch abgewandten Endbereich 96 a, b bildet der Abweiser 94 eine Schlaufe 98, die den jeweiligen Endbereich 96 a, b verstärkt und einem Auffasern entgegenwirken kann.

Im Betrieb wird die Presse 10 durch das nicht dargestelltes Arbeitsfahrzeug über üblicherweise unebenen Untergrund bewegt. Darüber hinaus befinden sich diverse Bauteile und/oder Arbeitsmitte der Presse 10 in Bewegung. So führt beispielsweise die Aufnahmevorrichtung 22 dem Ballenpressraum 26 Erntegut zur Bildung eines Ballens zu. Darüber hinaus wird beispielsweise das Pressmittel 34 gemäß der Darstellung in Figur 1 und 2 in Bewegung versetzt (siehe Pfeil A). All dies führt zu Vibrationen der Presse 10, durch welche der flexible Abweiser 94 in Bewegung versetzt wird und beispielsweise, je nach Stärke und Art der auftretenden Vibrationen und der genauen Ausführung des Abweisers 94, pendelt, flattert und/oder schwingt. Durch die Bewegung des Abweisers 94 wird einer Ablagerung von Material, welches beispielsweise bei schwierigen, insbesondere trockenen Erntebedingungen aus dem eigentlichen Ballenpressraum 26 beispielsweise im Bereich der Rollen 28 - 32 bzw. Walzen 36 - 56 in das umliegende Gehäuse 12 gelangen kann, entgegenwirkt. Auf dies Weise kann einer Ablagerungen und/oder Anhaftung von Material insbesondere in Bereichen um den Gehäuse- oder Rahmenteil 86 der Hüllmittelzufuhreinrichtung 84 entgegengewirkt werden.

## Patentansprüche

1. Landwirtschaftliche Ballenpresse zur Bildung rundzylindrischer Ballen, mit einem Gehäuse (12), wenigstens einem in dem Gehäuse (12) angeordneten und einen Ballenpressraum (26) bildenden Pressmittel (34) und mit einer Abweisereinrichtung (88) zur Verminderung von Materialansammlungen in der landwirtschaftlichen Ballenpresse (10), wobei die Abweisereinrichtung (88) wenigstens einen zumindest abschnittsweise beweglich, flexibel ausgebildeten Abweiser (94) aufweist, wobei die Abweisereinrichtung (88) während der Bildung eines Ballen durch im Betrieb der Rundballenpresse (10) auftretende Vibrationen derart beeinflussbar ist, dass der Abweiser (94) in Bewegung, vorzugsweise in Schwingung, Pendeln bzw. Flattern, versetzbar ist, **dadurch gekennzeichnet, dass**
der Abweiser (94) einenends durch wenigstens ein Haltemittel (92) direkt mit einem Rahmenteil (14) der Rundballenpresse (10) verbunden ist und sich andernends im Wesentlichen frei beweglich erstreckt, wobei die Abweisereinrichtung (88) zwischen dem Pressmittel (34) und einem Gehäuse- oder Rahmenteil (86) einer Hüllmittelzufuhreinrichtung (84) angeordnet ist, derart, dass aus dem Ballenpressraum (26) heraustretendes, nicht gepresstes Erntegut zumindest teilweise von der Abweisereinrichtung (88) abgefangen wird und das von der Abweisereinrichtung (88) abgefangene Erntegut ohne Materialanhäufungen abprallt und in Richtung einer Aufnahmevorrichtung (22) herunterfällt.

2. Ballenpresse nach Anspruch 1, **dadurch gekennzeichnet, dass** der Abweiser (94) zumindest im Wesentlichen einteilig ausgebildet ist.

3. Ballenpresse nach einem der Ansprüche 1 oder 2, **dadurch gekennzeichnet, dass** der Abweiser (94) zumindest bereichsweise aus einem elastischen und/oder gummiartigen, eine textile Trägerschicht aufweisenden Material besteht.

4. Ballenpresse nach Anspruch 3, **dadurch gekennzeichnet, dass** der Abweiser (94) zumindest in einem seiner Endbereiche (96 a, b) eine Schlaufe (98) bildet.

5. Ballenpresse nach einem der vorherigen Ansprüche, **dadurch gekennzeichnet, dass** sich die Abweisereinrichtung (88) zumindest im Wesentlichen horizontal erstreckt.

## Claims

1. Agricultural baler for forming round cylindrical bales, having a housing (12), at least one pressing means (34), which is arranged in the housing (12) and forms a bale pressing space (26), and having a deflector device (88) for reducing material accumulations in the agricultural baler (10), wherein the deflector device (88) has at least one deflector (94) which is constructed in an at least partially movable, flexible manner, wherein the deflector device (88) during the formation of a bale can be influenced by vibrations occurring during operation of the round baler (10) in such a manner that the deflector (94) can be caused to move, preferably oscillate, vibrate or wobble, **characterized in that** the deflector (94) is connected at one end by means of at least one retention means (92) directly to a frame portion (14) of the roundbaler (10) and extends at the other end so as to be substantially freely movable, wherein the deflector device (88) is arranged between the pressing means (34) and a housing or frame portion (86) of a wrapping means supply device (84) in such a manner that non-pressed crop discharged from the bale pressing space (26) is at least partially caught by the deflector device (88) and the crop caught by the deflector device (88) bounces off without heaping up of the material and drops down in the direction of a receiving device (22).

2. Baler according to Claim 1, **characterized in that** the deflector (94) is constructed at least substantially in one piece.

3. Baler according to either of Claims 1 and 2, **characterized in that** the deflector (94) is composed at least in regions of an elastic and/or rubber-like material having a textile carrier layer.

4. Baler according to Claim 3, **characterized in that** the deflector (94) forms a loop (98) at least in one of its end regions (96a, b).

5. Baler according to one of the preceding claims, **characterized in that** the deflector device (88) extends at least substantially horizontally.

## Revendications

1. Presse à balles agricole pour former des balles rondes cylindriques, comprenant un boîtier (12), au moins un moyen de pressage (34) disposé dans le boîtier (12) et formant un espace de presse à balles (26) et un dispositif déflecteur (88) pour réduire les accumulations de matière dans la presse à balles agricole (10), le dispositif déflecteur (88) présentant au moins un déflecteur (94) réalisé sous forme flexible, déplaçable au moins en partie, le dispositif déflecteur (88), pendant la formation d'une balle, pouvant être influencé par des vibrations se produisant pendant le fonctionnement de la presse à balles rondes (10) de telle sorte que le déflecteur (94) puisse être mis en mouvement, de préférence en mouvement oscillant, en mouvement pendulaire ou en mouvement de battement, **caractérisée en ce que**
le déflecteur (94) est connecté au niveau d'une extrémité par au moins un moyen de retenue (92) directement à une partie de châssis (14) de la presse à balles rondes (10) et s'étend au niveau de l'autre extrémité essentiellement de manière librement déplaçable, le dispositif déflecteur (88) étant disposé entre le moyen de pressage (34) et une partie de boîtier ou de châssis (86) d'un dispositif d'alimentation en moyen d'enveloppement (84), de telle sorte que le produit de récolte non pressé sortant de l'espace de presse à balles (26) soit recueilli au moins en partie par le dispositif déflecteur (88) et que le produit de récolte reçu par le dispositif déflecteur (88) rebondisse sans accumulations de matière et tombe dans la direction d'un dispositif de réception (22).

2. Presse à balles selon la revendication 1, **caractérisée en ce que** le déflecteur (94) est réalisé au moins essentiellement d'une seule pièce.

3. Presse à balles selon l'une quelconque des revendications 1 et 2, **caractérisée en ce que** le déflecteur (94) se compose au moins en partie d'un matériau élastique et/ou de type caoutchouc, présentant une couche de support textile.

4. Presse à balles selon la revendication 3, **caractérisée en ce que** le déflecteur (94) forme, au moins dans une de ses régions d'extrémité (96a, b), une boucle (98).

5. Presse à balles selon l'une quelconque des revendications précédentes, **caractérisée en ce que** le dispositif déflecteur (88) s'étend au moins essentiellement horizontalement.
